(19) Europäisches Patentamt
European Patent Office
Office européen des brevets

(11) **EP 4 462 696 A1**

(12) **EUROPEAN PATENT APPLICATION**

(43) Date of publication:
**13.11.2024   Bulletin 2024/46**

(21) Application number: **23172154.9**

(22) Date of filing: **08.05.2023**

(51) International Patent Classification (IPC):
***H04B 10/2575*** *(2013.01)*

(52) Cooperative Patent Classification (CPC):
**H04B 10/25759;** H04B 2210/006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Rohde & Schwarz GmbH & Co. KG
81671 München (DE)**

(72) Inventors:
• **Ruengeler, Matthias
81671 München (DE)**
• **Peschke, Martin
81671 München (DE)**
• **Hechtfischer, Gerd
81671 München (DE)**
• **Dettmann, Ingo
81671 München (DE)**
• **Dille, Christian
81671 München (DE)**
• **Harms, Julian
81671 München (DE)**

(74) Representative: **Prinz & Partner mbB
Patent- und Rechtsanwälte
Rundfunkplatz 2
80335 München (DE)**

(54) **OPTICAL TRANSMITTER SYSTEM AND SIGNAL TRANSMISSION METHOD**

(57)      An optical transmitter system (10) for receiving and converting a radio frequency (RF) signal into an optical signal is described. The optical transmitter system (10) comprises an RF receiver module (12) and at least two signal manipulation paths (16). The RF receiver module (12) is configured to receive an RF signal, The at least two signal manipulation paths (16) are connected with the RF receiver module (12), respectively, such that the at least two signal manipulation paths receive the RF signal from the receiver module (12). The signal manipulation paths (16) are configured to process the received RF signal, thereby obtaining a manipulated optical signal, respectively. Each of the signal manipulation paths (16) comprises an electro-optical convertor (30), wherein the electro-optical convertor (30) is configured to convert RF signals into a corresponding converted optical signal. At least one of the signal manipulation paths (16) comprises a signal manipulation unit (24, 26), the signal manipulation unit (24, 26) being configured to adapt a signal processed by the respective signal manipulation path (16) based on at least one operation to obtain a manipulated signal. Further, a signal transmission method is described.

**Fig. 2**

# Description

The invention generally relates to an optical transmitter system for receiving and converting a radio frequency (RF) signal into an optical signal. The invention further relates to a signal transmission method.

RF-over-fiber is a technique that is used in different applications in order to transmit high-frequency RF signals over larger distances with reduced losses.

For example, such RF-over-fiber techniques can be used in measurement systems in order to transmit high-frequency signals between a measurement instrument and external RF frontends.

As another example, such RF-over-fiber techniques may be used in order to transmit an RF signal received via an antenna from the antenna to a computing unit.

However, RF-over-fiber techniques known in the art have the problem that the signal can only transmitted with a rather low signal-to-noise ratio (SNR), thereby limiting the obtainable bandwidth.

Thus, the object of the present invention is to provide an optical transmitter system and a signal transmission method that allow for transmitting received RF signals with enhanced SNR.

According to the invention, the problem is solved by an optical transmitter system for receiving and converting a radio frequency (RF) signal into an optical signal. The optical transmitter system comprises an RF receiver module and at least two signal manipulation paths. The RF receiver module is configured to receive an RF signal. The at least two signal manipulation paths are connected with the RF receiver module, respectively, such that the at least two signal manipulation paths receive the RF signal from the receiver module. The signal manipulation paths are configured to process the received RF signal, thereby obtaining a manipulated optical signal, respectively. Each of the signal manipulation paths comprises an electro-optical convertor, wherein the electro-optical convertor is configured to convert RF signals into a corresponding converted optical signal. At least one of the signal manipulation paths comprises a signal manipulation unit, the signal manipulation unit being configured to adapt a signal processed by the respective signal manipulation path based on at least one operation to obtain a manipulated signal.

Therein and in the following, the term "adapt a signal processed by the respective signal manipulation path" is understood to denote that a corresponding RF signal or a corresponding converted optical signal is adapted by means of the signal manipulation unit.

Moreover, the term "based on at least one operation to obtain a manipulated signal" is understood that a linear operation and/or a non-linear operation may be applied to the signal processed by the respective signal manipulation path in order to obtain the manipulated signal.

In other words, the signal manipulation unit may be configured to adapt the received RF signal or the corresponding converted optical signal, as will be described in more detail below.

The optical transmitter system according to the present invention is based on the idea to split the received RF signal into a plurality of signal manipulation paths that each process the received RF signal, thereby obtaining a plurality of manipulated optical signals.

The plurality of manipulated optical signals may be transmitted to a receiver, wherein the receiver may reconstruct the received RF signal based on the plurality of manipulated optical signals.

It has turned out that the SNR (of the reconstructed RF signal) obtainable by means of the optical transmitter system according to the present invention is enhanced significantly compared to prior art RF-over-fiber techniques, particularly by at least 3 dB.

For example, the optical transmitter system according to the present invention is suitable for transmitting RF signals having a frequency up to several ten GHz, or even up to several hundred GHz with enhanced SNR and with low losses.

Moreover, the optical transmitter system according to the present invention is suitable for transmitting RF signals having a bandwidth of up to several ten GHz, e.g. up to 50 GHz or above.

It is to be understood that an arbitrary number greater than or equal to 1 of the signal manipulation paths may comprise a signal manipulation unit, respectively.

For example, all signal manipulation paths may comprise a signal manipulation unit, respectively.

As another example, all signal manipulation paths but one may comprise a signal manipulation unit, respectively, etc.

According to an aspect of the present invention, the signal manipulation unit is provided upstream of the electro-optical convertor. Thus, in this case the manipulated signal corresponds to the received RF signal, adapted by means of the signal manipulation unit. In this case, the electro-optical convertor is configured to convert the manipulated signal into a corresponding converted optical signal, namely into the corresponding manipulated optical signal.

In other words, the signal manipulation unit is configured to operate in the electrical domain, i.e. on the RF signal received from the RF receiver module.

According to another aspect of the present invention, the signal manipulation unit is provided downstream of the electro-optical convertor. Thus, in this case the electro-optical convertor is configured to convert the received RF signal into a corresponding converted optical signal. The manipulated signal corresponds to the converted optical signal, adapted by means of the signal manipulation unit. Thus, in this case the manipulated signal may be equal to the manipulated optical signal.

In other words, the signal manipulation unit is configured to operate in the optical domain, i.e. on the converted signal received from the electro-optical convertor.

In an embodiment of the present invention, the RF signal comprises a first symbol sequence, wherein each of the manipulated optical signals comprises a symbol sequence being associated with the first symbol sequence. In other words, each of the manipulated optical signals may comprise information on the first symbol sequence.

Particularly, each of the manipulated optical signals may comprise information on the first symbol sequence such that the first symbol sequence could be reconstructed based on each of the manipulated optical signals alone.

While the individual symbols comprised in the symbol sequences may be different from the individual symbols of the first symbol sequence, there may be a bijective relation between symbols of the respective symbol sequence and the symbols of the first symbol sequence.

Put differently, the information comprised in the first symbol sequence may be transmitted several times in parallel by means of the manipulated optical signals. This way, the achievable SNR is enhanced significantly.

In a further embodiment of the present invention, the optical transmitter system comprises an optical combiner module, wherein the optical combiner module is connected with the signal manipulation paths, respectively, so as to receive the manipulated optical signals from the signal manipulation paths, and wherein the optical combiner module is configured to combine the manipulated optical signals so as to obtain a combined manipulated optical signal. The combined manipulated optical signal can be transmitted to a target location, e.g. via at least one optical fiber being connected to an output of the optical combiner module.

The combined manipulated optical signal may be a superposition of the manipulated optical signals.

A further aspect of the present invention provides that the electro-optical convertors are configured to convert RF signals such that the converted optical signals are associated with different optical channels, particularly wherein the different optical channels are independent of each other. As the converted optical signals are associated with different optical channels, the manipulated optical signals are associated with different optical channels as well. In other words, different manipulated optical signals may be transmitted via different optical channels. Thus, the obtainable SNR is further enhanced.

Optionally, the different optical channels are independent of each other, thereby increasing the obtainable SNR even further.

Therein, the term "independent" is understood to denote that there is no cross-talk between different channels being independent of each other. In other words, independent channels are pairwise orthogonal.

Moreover, the term "optical channel" is understood to denote an optical fiber, a polarization within an optical fiber, an IQ plane on a polarization, a mode within an optical fiber, and/or a wavelength.

Accordingly, different manipulated optical signals may be transmitted on different optical fibers, with different polarizations within an optical fiber, with different IQ planes on a polarization, as different modes within an optical fiber, and/or with different wavelengths (i.e. with different "color").

In an embodiment of the present invention, the at least one operation is a linear operation, wherein the linear operation comprises applying a linear factor to the signal processed by the respective signal manipulation path. Particularly, the linear factor may be greater than 1, i.e. a gain may be applied to the signal processed by the respective signal manipulation path. Alternatively, the linear factor may be smaller than 1, i.e. the signal processed by the respective signal manipulation path may be attenuated.

According to another aspect of the present invention, the linear factor is different for each of the signal manipulation paths, particularly wherein the linear factor increases exponentially between different signal manipulation paths. Accordingly, a different linear factor, e.g. a different gain, is applied to each of the manipulated signals. It has turned out that the obtainable SNR is further enhanced in this case.

In a further embodiment of the present invention, the at least one operation is a non-linear operation, wherein the non-linear operation comprises a modulo operation and/or applying a sawtooth function to the signal processed by the respective signal manipulation path.

Non-linear operations applied to different signals processed by the signal manipulation paths may be different from each other, such that the resulting manipulated signals are distinguishable from each other, thereby further enhancing the obtainable SNR.

In fact, different modulo operations and/or different sawtooth functions may be applied to different signals processed by the signal manipulation paths.

Another aspect of the present invention provides that the at least one operation is a non-linear operation, wherein the non-linear operation comprises applying a non-linear function to the signal processed by the respective signal manipulation path. Like described above, non-linear operations applied to different signals processed by the signal manipulation paths may be different from each other, such that the resulting manipulated signals are distinguishable from each other, thereby further enhancing the obtainable SNR.

In fact, different non-linear functions may be applied to different signals processed by the signal manipulation paths.

The non-linear function may correspond to a mapping of the signal processed by the respective signal manipulation path to a spiral, particularly wherein signals processed by different signal manipulation paths are mapped to different spirals or to different spiral arms.

Particularly, the different spirals or the different spiral arms are nonintersecting, such that the resulting manipulated signals are distinguishable from each other, thereby further enhancing the obtainable SNR.

In an embodiment of the present invention, the electro-optical convertors are configured to generate the manipulated optical signals by means of an amplitude modulation, by means of a phase modulation, and/or by means of a frequency modulation, respectively. More precisely, the electro-optical convertors are configured to modulate the respective RF signal, i.e. the received RF signal or the manipulated signal, onto light by means of an amplitude modulation, by means of a phase modulation, and/or by means of a frequency modulation.

Accordingly, the electro-optical convertors may be established as an electro-optical modulator, respectively. In fact, any suitable electro-optical modulator known in the state of the art may be used.

The optical transmitter system may further comprise a light source and a beam splitter, wherein the light source is configured to emit coherent light, and wherein the electro-optical convertors are connected to the light source by means of the beam splitter. Thus, all electro-optical convertors receive light from the same light source and convert the respective RF signal into the converted optical signal based on the light received from the light source.

Particularly, the electro-optical convertors may be configured to modulate the light received from the light source based on the respective RF signal.

For example, the light source may be established as a laser.

The optical transmitter system may further comprise an optical receiver module, wherein the optical receiver module is configured to receive the manipulated optical signals, and wherein the optical receiver module is configured to convert the manipulated optical signals into RF signals, particularly wherein the optical receiver module is configured to digitize the RF signals. In general, the optical receiver module may be configured to reconstruct the received RF signal and/or a symbol sequence comprised in the received RF signal based on the received manipulated optical signals.

In fact, the optical receiver module may be configured to revert the adaptations to the received RF signal performed by the signal manipulation paths, such that the received RF signal is reconstructed.

For example, the optical receiver module may be connected with the signal manipulation paths and/or with the optical combiner described above via at least one optical fiber, particularly via a plurality of optical fibers.

Particularly, the optical receiver module may be provided at a target location, i.e. at a location to which the received RF signal is to be transmitted. Thus, the optical signal transmitter system according to the present invention allows for transmitting the RF signal from a reception point, e.g. from an antenna, to the target location with minimal losses and with a high SNR.

According to the invention, the problem further is solved by a signal transmission method. The signal transmission method comprises the steps of:

- receiving, by means of a receiver module, an RF signal;

- forwarding the received RF signals to at least two signal manipulation paths; and

- processing the received RF signals by means of the at least two signal manipulation paths, thereby obtaining at least two manipulated optical signals.

Processing the received RF signals comprises adapting, by means of a signal manipulation unit, a signal processed by the respective signal manipulation path based on at least one operation to obtain a manipulated signal. Processing the received RF signals further comprises converting, by means of an electro-optical convertor, a signal processed by the respective signal manipulation path into a corresponding converted optical signal.

Particularly, the optical transmitter system described above is configured to perform the signal transmission method according to the present invention.

Regarding the further advantages and properties of the signal transmission method, reference is made to the explanations given above with respect to the optical transmitter system, which also hold for the signal transmission method and vice versa.

The foregoing aspects and many of the attendant advantages of the claimed subject matter will become more readily appreciated as the same become better understood by reference to the following detailed description, when taken in conjunction with the accompanying drawings, wherein:

- Figure 1 schematically shows an optical transmitter system according to the present invention;

- Figure 2 shows an exemplary embodiment of the optical transmitter system of Figure 1;

- Figure 3 shows a signal manipulation path of the optical transmitter system of Figure 2;

- Figure 4 shows a an alternative variant of a signal manipulation path;

- Figure 5 shows a flow chart of a signal transmission method according to the present invention;

- Figures 6A shows a first diagram illustrating a step of the method of Figure 5;

- Figures 6B shows a second diagram illustrating a step of the method of Figure 5; and

- Figures 6C shows a third diagram illustrating a step of the method of Figure 5.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

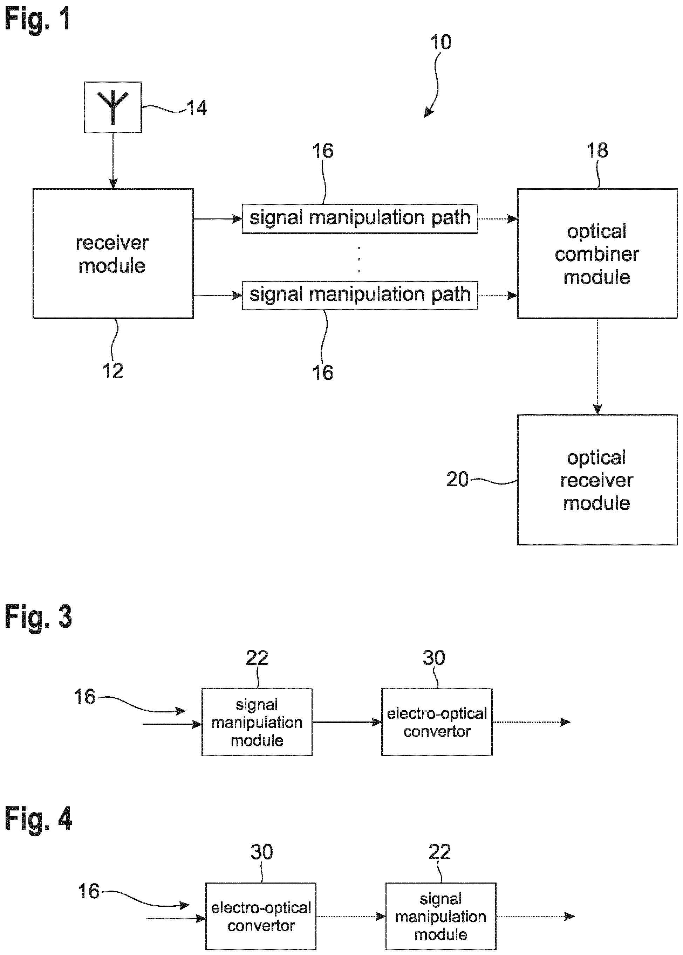

Figure 1 schematically shows an optical transmitter system 10 for receiving and transmitting RF signals.

The optical transmitter system 10 comprises a receiver module 12 that is configured to receive an RF signal.

For example, the receiver module 12 may be connected with an RF antenna 14, and may receive the RF signal from the RF antenna 14.

In a particular example, the RF antenna 14 may be a ship antenna that is used for communication and/or for locating objects such as other ships.

However, it is to be understood that the optical transmitter system 10 may be integrated in other systems, for example in measurement systems in order to transmit signals between a measurement instrument and external frontends, or in satellite communication systems in order to transmit RF signals to be transmitted from a base station to a satellite antenna and/or vice versa.

Therein and in the following, the term "module" is understood to describe suitable hardware, suitable software, or a combination of hardware and software that is configured to have a certain functionality, if the respective module is configured to operate on electrical signals.

The hardware may, inter alia, comprise a CPU, a GPU, an FPGA, an ASIC, or other types of electronic circuitry.

If the respective module is configured to operate on optical signals, the term "module" is understood to denote an optical component or a combination of optical components that is/are configured to perform the described functionality.

Downstream of the receiver module 12, a plurality of signal manipulation paths 16 are provided, i.e. at least two signal manipulation paths 16.

The receiver module 12 is configured to forward the received RF signal to the signal manipulation paths 16, particularly to each of the signal manipulation paths 16.

The signal manipulation paths 16 are configured to process the received RF signal, respectively, thereby obtaining a manipulated optical signal, respectively.

It is noted that in Figure 1 electrical signals are denoted by drawn through arrows, while optical signals are denoted by dotted arrows.

Optionally, the optical transmitter system 10 may comprise an optical combiner module 18 that is provided downstream of the signal manipulation paths 16.

The optical combiner module 18 is configured to combine the manipulated optical signals so as to obtain a combined manipulated optical signal.

For example, the optical combiner module 18 is configured to superpose the manipulated signals, thereby obtaining the combined manipulated optical signal.

Downstream of the optical combiner module 18, an optical receiver module 20 is provided that is connected with the optical combiner module 18 in a signaltransmitting manner, particularly via at least one optical fiber.

The optical receiver module 20 may be provided at a target location, i.e. at a location to which the RF signal received via the receiver module 12 is to be transmitted.

Referring to the examples given above, the optical receiver module may be provided at or in a measurement instrument, on a bridge of a ship, at a satellite antenna, or at a satellite communication base station.

The optical receiver module 20 is configured to receive the manipulated optical signals, wherein the optical receiver module is configured to convert the manipulated optical signals into RF signals.

Particularly, the optical receiver module 20 is configured to digitize the RF signals and/or reconstruct the RF signal received via the receiver module 12.

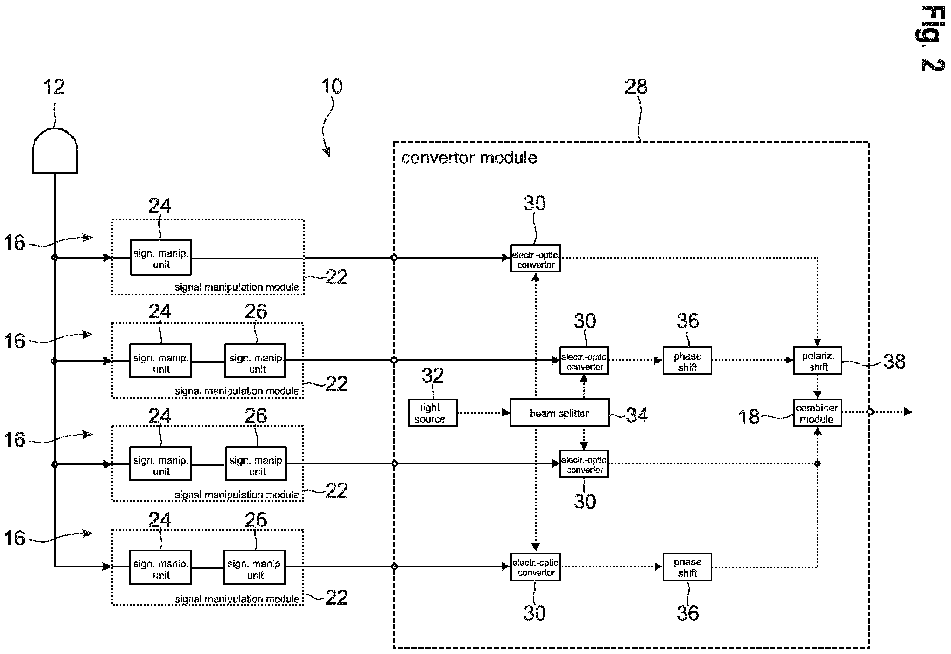

Figure 2 shows a first variant of the optical transmitter system 10 in more detail.

In the exemplary embodiment shown in Figure 2, the optical transmitter system 10 comprises four signal manipulation paths 16.

However, it is to be understood that the optical transmitter system 10 may comprise any other suitable number of signal manipulation paths 16, for example 2, 3, 6, 8, or any other number.

The signal manipulation paths 16 comprises a signal manipulation module 22, respectively, wherein the signal manipulation modules 22 are each connected to the receiver module 12 so as to receive the received RF signal.

In the exemplary embodiment shown in Figure 2, the signal manipulation modules 22 each comprise a first signal manipulation unit 24.

Moreover, all signal manipulation modules 22 but one comprise a second signal manipulation unit 26.

It is emphasized, that the embodiment illustrated in Figure 2 is completely exemplary.

In fact, an arbitrary number of the signal manipulation paths 16 may comprise a signal manipulation module 22, and an arbitrary number of the signal manipulation modules 22 may comprise a first signal manipulation unit 24 and/or a second signal manipulation unit 26.

The functionality of the first signal manipulation unit 24 and of the second signal manipulation unit 26 will be described in more detail below.

Downstream of the signal manipulation modules 22, a convertor module 28 is provided.

The convertor module 28 comprises a plurality of electro-optical convertors 30. More precisely, the convertor module 28 comprises one electro-optical convertor 30 for each of the signal manipulation paths 16.

Therein, the electro-optical convertors 30 are provided downstream of the signal manipulation modules 22.

The convertor module 28 further comprises a light source 32 and a beam splitter 34 being connected with the light source 32.

In general, the light source 32 is configured to emit coherent light. For example, the light source 32 may be established as a laser.

The beam splitter 34 is connected with the electro-optical convertors 30, particularly with each of the electro-optical convertors 30.

The beam splitter 34 is configured to receive light from the light source 32, and to forward the received light to the electro-optical convertors 30.

In general, the electro-optical convertors 30 are configured to convert RF signals received from components upstream of the respective signal manipulation path 16 into corresponding optical signals.

For example, the electro-optical convertors 30 may be configured to modulate the received RF signal onto the light received from the light source 32 via the beam splitter 34.

In other words, the electro-optical convertors 30 may be established as electro-optical modulators.

Optionally, the convertor module 28 may comprise one or several phase-shifting units 36 that is/are provided downstream of the respectively associated electro-optical convertor 30.

The phase-shifting units 36 are configured to shift the phase of the respective optical signal received from the associated electro-optical convertor 30 by a predetermined phase shift, e.g. by $\pi/2$.

Optionally, the convertor module 28 may further comprise one or several polarization-shifting units 38 that is/are provided downstream of the respectively associated electro-optical convertor 30.

The polarization-shifting units 38 are configured to shift the polarization of the respective optical signal received from the associated electro-optical convertor 30 in a predetermined manner.

Figure 3 shows a signal manipulation path 16 of the exemplary embodiment of the optical transmitter system 10 shown in Figure 2, wherein the electro-optical convertor 30 is provided downstream of the signal manipulation module 22.

Thus, in this case the signal manipulation module 22 is configured to operate in the electrical domain.

Figure 4 shows an alternative variant of the signal manipulation path 16, wherein the electro-optical convertor 30 is provided upstream of the signal manipulation module 22.

Thus, in this case the signal manipulation module 22 is configured to operate in the optical domain.

Without restriction of generality, the explanations hereinafter refer to the variant of the optical transmitter system 10 shown in Figures 2 and 3.

However, it is to be understood that the explanations given hereinafter likewise apply to the variant shown in Figure 4, with the appropriate adaptations.

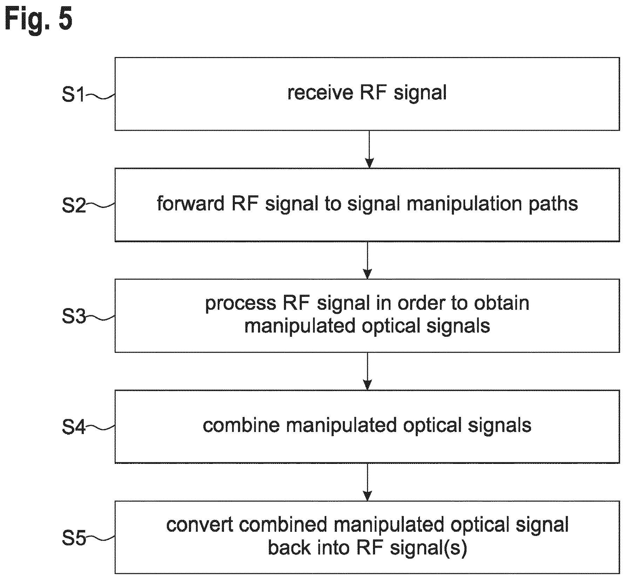

The optical transmitter system 10 described above is configured to perform a signal transmission method that is described in the following with reference to Figure 5.

An RF signal is received by means of the receiver module 12 (step S1).

In general, the RF signal may have a frequency of up to several ten GHz, particularly up to several hundred GHz, and/or a bandwidth up to several ten GHz, e.g. up to 50 GHz or above.

The received RF signal may comprise a first symbol sequence corresponding to information to be transmitted.

The received RF signal is forwarded to each of the signal manipulation paths 16 by means of the receiver module 12 (step S2).

The received RF signal is processed by means of the signal manipulation paths 16 in parallel, thereby obtaining a plurality of manipulated optical signals (step S3).

Therein, processing of the received RF signal by means of the respective signal manipulation path 16 comprises processing of the received RF signal by means of the signal manipulation module 22.

In fact, in each signal manipulation path 16 comprising a first signal manipulation unit 24, a linear operation may be applied to the received RF signal by means of the first signal manipulation unit 24.

The linear operation may comprises applying a linear factor to the received RF signal.

The linear factor may be greater than 1, i.e. a gain may be applied to the signal processed by the respective signal manipulation path.

Alternatively, the linear factor may be smaller than 1, i.e. the received RF signal may be attenuated.

The linear factor may be different for each of the signal manipulation paths 16. Particularly, the linear factor increases exponentially between different signal manipulation paths 16.

For example, in a first one of the signal manipulation paths 16, the linear factor may be equal to $a^0 =$

1, wherein *a* is an arbitrary gain factor.

In a second one of the signal manipulation paths 16, the linear factor may be equal to $a^1 = a$.

In a third one of the signal manipulation paths 16, the linear factor may be equal to $a^2$, etc. up to a linear factor $a^{N-1}$ for the N-th signal manipulation path 16.

However, it is also conceivable that the same linear factor is applied in all signal manipulation paths 16.

Alternatively or additionally to applying the linear operation to the received RF signal, in each signal manipulation path 16 comprising a second signal manipulation unit 26, a non-linear operation may be applied to the received RF signal by means of the second signal manipulation unit 26.

In general, the non-linear operation corresponds to a non-linear function being applied to the received RF signal by means of the second signal manipulation unit 26.

As a result of splitting the received RF signal into N signal manipulation paths 16 and processing the received RF signal by means of the signal manipulation modules 22, N manipulated signals $y_1, ..., y_n$ are obtained.

In other words, parallel processing of the received RF signal by means of the N signal manipulation paths 16 or rather by means of the signal manipulation modules 22 corresponds to an N-dimensional mapping

$$u \rightarrow \big(y_1(u), y_2(u), ..., y_n(u)\big).$$

Therein, *u* corresponds to the received RF signal, particularly wherein *u* is the amplitude of the received RF signal. The $y_i$ denote a linear or a non-linear function, respectively, that is applied to the received RF signal by the respective signal manipulation module 22.

Thus, as the received RF signal comprises the first symbol sequence, the manipulated signals $y_i(u)$ respectively comprise a symbol sequence being associated with the first symbol sequence.

In other words, each of the manipulated signals $y_i(u)$ comprises information on the first symbol sequence.

In a particular example, the non-linear operation comprises a modulo operation and/or applying a sawtooth function to the received RF signal.

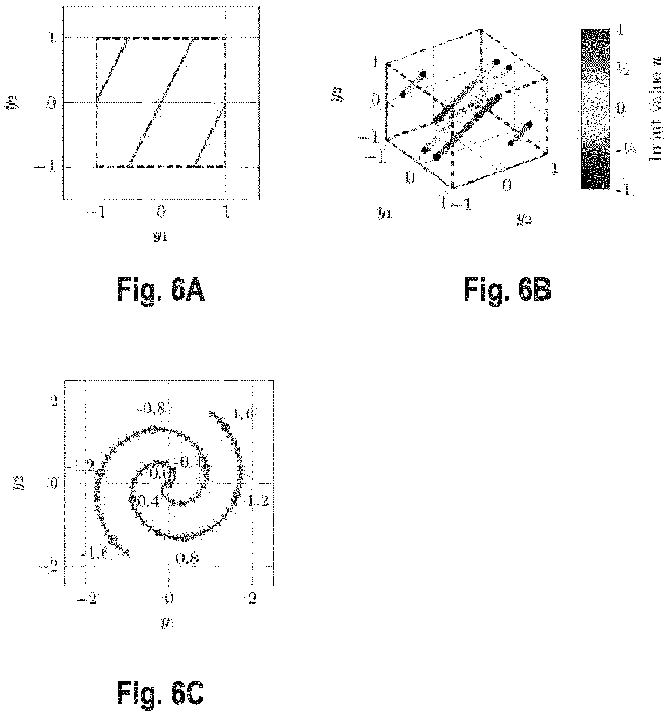

This variant is illustrated in Figures 6A and 6B, wherein Figure 6A shows an exemplary mapping of the received RF signal to a two-dimensional modulo function, i.e. to a two-dimensional sawtooth function.

In this example, the non-linear operation is a mapping u → ($y_1(u),y_2(u)$). Thus, in this case N may be equal to 2.

Figure 6B shows a further exemplary mapping of the received RF signal to a three-dimensional modulo-function.

In this example, the non-linear operation is a mapping u → ($y_1(u),y_2(u),y_3(u)$). Thus, in this case N may be equal to 3.

Figure 6C shows a further exemplary mapping of the received RF signal to a spiral, particularly to an Archimedes spiral.

In this example, the non-linear operation is a mapping $u \rightarrow (y_1(u),y_2(u))$. Thus, in this case N may be equal to 2.

The functions $y_1(u)$ and $y_2(u)$ are given by

$$f_1(u) = \sqrt{\frac{\Delta|u|}{c\,\pi^2}} \cdot \mathrm{sign}(u) \cdot \cos\left(\sqrt{\frac{\Delta|u|}{c\cdot\Delta}}\right),$$

$$f_2(u) = \sqrt{\frac{\Delta|u|}{c\,\pi^2}} \cdot \mathrm{sign}(u) \cdot \sin\left(\sqrt{\frac{\Delta|u|}{c\cdot\Delta}}\right).$$

Therein, *c* and Δ are constants. In the particular example shown in Figure 6C, c is equal to 0.16 and Δ is equal to 0.2. However, it is to be understood that the parameters *c* and Δ can be tuned arbitrarily.

The manipulated signals are forwarded to the respectively associated electro-optical convertors 30.

The electro-optical convertors 30 convert the manipulated signals into corresponding manipulated optical signals.

Particularly, the electro-optical convertors 30 may modulate the light received from the light source 32 based on the respective manipulated signal.

In fact, the electro-optical convertors 30 may modulate the respective manipulated signal onto the light received from the light source 32 based on the manipulated signal by means of an amplitude modulation, by means of a phase modulation, and/or by means of a frequency modulation.

Therein, the resulting manipulated optical signals may be associated with different optical channels, i.e. different manipulated optical signals may be transmitted on different optical fibers, with different polarizations within an optical fiber, with different IQ planes on a polarization, as different modes within an optical fiber, and/or with different wavelengths (i.e. with different "color").

Particularly, the different optical channels may be independent of each other, i.e. pairwise orthogonal.

It is noted that each of the manipulated optical signals may comprise a symbol sequence being associated with the first symbol sequence comprised in the received RF signal.

In other words, each of the manipulated optical signals may comprise information on the first symbol sequence, such that the first symbol sequence could be reconstructed based on each of the manipulated optical signals alone.

Optionally, the manipulated optical signals are combined, particularly superposed, by means of the optical combiner module 18, thereby obtaining a combined manipulated optical signal (step S4).

Without restriction of generality, this case is assumed in the following.

The combined manipulated optical signal is transmitted to the optical receiver module 20.

The combined manipulated optical signal or rather the manipulated optical signals comprised in the combined manipulated optical signal are converted into corresponding RF signals by means of the receiver module 20 (step S5).

Particularly, the optical receiver module 20 may digitize the RF signals.

In fact, the optical receiver module 20 may revert the adaptations to the received RF signal performed by the signal manipulation paths, such that the received RF signal is reconstructed.

For this purpose, the optical receiver module 20 may map the received (possibly noisy) combined manipulated optical signal z comprising individual manipulated optical signals or rather the corresponding converted RF signals to the nearest matching point $(\tilde{y}_1, ..., \tilde{y}_N)$ on a manifold defined by $(y_1(u), y_2(u), ..., y_N(u))$.

Based on this nearest matching point, the originally received RF signal can be reconstructed according to $u = y_1^{-1}(\tilde{y}_1), \; u = y_2^{-1}(\tilde{y}_2)$, etc.

For example, the original RF signal u may be reconstructed such that an overall error associated with the equations $u = y_i^{-1}(\tilde{y}_i)$ is minimized, e.g. by means of a least squares technique.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An optical transmitter system for receiving and converting a radio frequency (RF) signal into an optical signal,

   wherein the optical transmitter system (10) comprises an RF receiver module (12) and at least two signal manipulation paths (16),
   wherein the RF receiver module (12) is configured to receive an RF signal,
   wherein the at least two signal manipulation paths (16) are connected with the RF receiver module (12), respectively, such that the at least two signal manipulation paths (16) receive the RF signal from the receiver module (12),
   wherein the signal manipulation paths (16) are configured to process the received RF signal, thereby obtaining a manipulated optical signal, respectively,
   wherein each of the signal manipulation paths (16) comprises an electro-optical convertor (30),
   wherein the electro-optical convertor (30) is configured to convert RF signals into a corresponding converted optical signal, and
   wherein at least one of the signal manipulation paths (16) comprises a signal manipulation unit (24, 26), the signal manipulation unit (24, 26) being configured to adapt a signal processed by the respective signal manipulation path (16) based on at least one operation to obtain a manipulated signal.

2. The optical transmitter system of claim 1, wherein the signal manipulation unit (24, 26) is provided upstream of the electro-optical convertor (30).

**3.** The optical transmitter system of claim 1, wherein the signal manipulation unit (24, 26) is provided downstream of the electro-optical convertor (30).

**4.** The optical transmitter system according to any one of the preceding claims, wherein the RF signal comprises a first symbol sequence, and wherein each of the manipulated optical signals comprises a symbol sequence being associated with the first symbol sequence.

**5.** The optical transmitter system according to any one of the preceding claims, wherein the optical transmitter system (10) comprises an optical combiner module (18), wherein the optical combiner module (18) is connected with the signal manipulation paths (16), respectively, so as to receive the manipulated optical signals from the signal manipulation paths (16), and wherein the optical combiner module (18) is configured to combine the manipulated optical signals so as to obtain a combined manipulated optical signal.

**6.** The optical transmitter system according to any one of the preceding claims, wherein the electro-optical convertors (30) are configured to convert RF signals such that the converted optical signals are associated with different optical channels, particularly wherein the different optical channels are independent of each other.

**7.** The optical transmitter system according to any one of the preceding claims, wherein the at least one operation is a linear operation, and wherein the linear operation comprises applying a linear factor to the signal processed by the respective signal manipulation path (16).

**8.** The optical transmitter system according to claim 7, wherein the linear factor is different for each of the signal manipulation paths (16), particularly wherein the linear factor increases exponentially between different signal manipulation paths (16).

**9.** The optical transmitter system according to any one of the preceding claims, wherein the at least one operation is a non-linear operation, and wherein the non-linear operation comprises a modulo operation and/or applying a sawtooth function to the signal processed by the respective signal manipulation path (16).

**10.** The optical transmitter system according to any one of the preceding claims, wherein the at least one operation is a non-linear operation, and wherein the non-linear operation comprises applying a non-linear function to the signal processed by the respective signal manipulation path (16).

**11.** The optical transmitter system according to claim 10, wherein the non-linear function corresponds to a mapping of the signal processed by the respective signal manipulation path (16) to a spiral, particularly wherein signals processed by different signal manipulation paths (16) are mapped to different spirals or to different spiral arms.

**12.** The optical transmitter system according to any one of the preceding claims, wherein the electro-optical convertors (30) are configured to generate the manipulated optical signals by means of an amplitude modulation, by means of a phase modulation, and/or by means of a frequency modulation, respectively.

**13.** The optical transmitter system according to any one of the preceding claims, further comprising a light source (32) and a beam splitter (34), wherein the light source (32) is configured to emit coherent light, and wherein the electro-optical convertors (30) are connected to the light source (32) by means of the beam splitter (34).

**14.** The optical transmitter system according to any one of the preceding claims, further comprising an optical receiver module (20), wherein the optical receiver module (20) is configured to receive the manipulated optical signals, and wherein the optical receiver module (20) is configured to convert the manipulated optical signals into RF signals, particularly wherein the optical receiver module (20) is configured to digitize the RF signals.

**15.** A signal transmission method, the signal transmission method comprising the steps of:

- receiving, by means of a receiver module (12), an RF signal;
- forwarding the received RF signals to at least two signal manipulation paths (16); and
- processing the received RF signals by means of the at least two signal manipulation paths (16), thereby obtaining at least two manipulated optical signals;
wherein processing the received RF signals comprises adapting, by means of a signal manipulation unit (24, 26), a signal processed by the respective signal manipulation path (16) based on at least one operation to obtain a manipulated signal, and
wherein processing the received RF signals comprises converting, by means of an electro-optical convertor (30), a signal processed by the respective signal manipulation path (16) into a corresponding converted optical signal.

**Fig. 1**

**Fig. 3**

**Fig. 4**

# Fig. 2

# Fig. 5

S1 — receive RF signal

S2 — forward RF signal to signal manipulation paths

S3 — process RF signal in order to obtain manipulated optical signals

S4 — combine manipulated optical signals

S5 — convert combined manipulated optical signal back into RF signal(s)

Fig. 6A

Fig. 6B

Fig. 6C

Europäisches
Patentamt

European
Patent Office

Office européen
des brevets

# EUROPEAN SEARCH REPORT

Application Number

EP 23 17 2154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/048071 A1 (SUZUKI YASUNORI [JP] ET AL) 25 April 2002 (2002-04-25) | 1-10, 12-15 | INV. H04B10/2575 |
| A | * paragraph [0079]; figure 6 * | 11 | |
| X | US 2023/110986 A1 (UYENO GERALD P [US] ET AL) 13 April 2023 (2023-04-13) | 1-10, 12-15 | |
| A | * figure 1 * | 11 | |
| X | EP 2 698 934 A1 (TITAN PHOTONICS [US]) 19 February 2014 (2014-02-19) | 1-10, 12-15 | |
| A | * figure 2 * | 11 | |

TECHNICAL FIELDS
SEARCHED      (IPC)

H04B

The present search report has been drawn up for all claims

| Place of search | Date of completion of the search | Examiner |
|---|---|---|
| Munich | 17 October 2023 | Inan, Beril |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 2154

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2023

| Patent document cited in search report | | Publication date | Patent family member(s) | | Publication date |
|---|---|---|---|---|---|
| US 2002048071 | A1 | 25-04-2002 | DE 60127791 | T2 | 27-12-2007 |
| | | | EP 1202475 | A2 | 02-05-2002 |
| | | | US 2002048071 | A1 | 25-04-2002 |
| US 2023110986 | A1 | 13-04-2023 | NONE | | |
| EP 2698934 | A1 | 19-02-2014 | CN 103595475 | A | 19-02-2014 |
| | | | EP 2698934 | A1 | 19-02-2014 |
| | | | JP 2014060702 | A | 03-04-2014 |
| | | | US 2014050484 | A1 | 20-02-2014 |

EPO FORM P0459

For more details about this annex : see Official Journal of the European Patent Office, No. 12/82